# EUROPEAN PATENT SPECIFICATION

(11) **EP 2 081 355 B1**
(45) Date of publication and mention of the grant of the patent: **15.03.2017**
(21) Application number: 08150416.9
(22) Date of filing: 18.01.2008
(51) Int. Cl.: H04L 29/08

(54) **SYSTEM AND METHOD FOR NETWORK INTERACTION BETWEEN COMPUTING DEVICES**
SYSTEM UND VERFAHREN ZUR NETZWERKINTERAKTION ZWISCHEN BERECHNUNGSGERÄTEN
SYSTÈME ET PROCÉDÉ POUR L'INTERACTION EN RÉSEAU ENTRE DISPOSITIFS INFORMATIQUES

(43) Date of publication of application: 22.07.2009
(73) Proprietor: BlackBerry Limited, Waterloo, ON N2K 0A7 (CA); Fat Free Mobile Inc., Mississauga, Ontario L5M 6M2 (CA)
(72) Inventor: Kim, Sang-Heun, Mississauga Ontario L5B 4M2 (CA); Stinson, Charles Laurence, Mississauga Ontario L5M 6M2 (CA); Mallick, Martyn, Baden Ontario N3A 3M4 (CA)
(74) Representative: MERH-IP Matias Erny Reichl Hoffmann Patentanwälte PartG mbB

(56) References cited:
- US-A1- 2004 024 842
- US-A1- 2007 288 837
- A.S.TANENBAUM: "Computer Networks, 4th edition." 2003, PEARSON EDUCATION, PRENTICE HALL. , US , XP002487114 * paragraph [07.3] *
- BERNERS-LEE MIT/W3C D CONNOLLY T: "Hypertext Markup Language - 2.0; rfc1866.txt" IETF STANDARD, INTERNET ENGINEERING TASK FORCE, IETF, CH, 1 November 1995 (1995-11-01), XP015007650 ISSN: 0000-0003

## Description

The present specification relates generally to communication and more specifically relates to a system and method for network interaction between computing devices.

Computing devices are becoming smaller and increasingly utilize wireless connectivity. Examples of such computing devices include portable computing devices that include wireless network browsing capability as well as telephony and personal information management capabilities. The smaller size of such client devices necessarily limits their,display capabilities. Furthermore the wireless connections to such devices typically have less bandwidth than corresponding wired connections. The Wireless Application Protocol ("WAP") was designed to address such issues, but WAP can still provide a very unsatisfactory experience or even completely ineffective experience, particularly where the small client device needs to effect a secure connection with web-sites that host web-pages that are optimized for full traditional desktop browsers.

A.S.TANENBAUM: "Computer Networks, 4th edition." 2003, PEARSON EDUCATION, PRENTICE HALL., US , describes the World Wide Web and the use of a browser to display information to the user. BERNERS-LEE MIT/W3C D CONNOLLY T: "Hypertext Markup Language - 2.0; rfc1866.txt" IETF STANDARD, INTERNET ENGINEERING TASK FORCE, IETF, CH, 1 November 1995 (1995-11-01), describes the Hypertext Markup Language version 2.0.

Moreover, US2004024842 (A1) describes a validation framework for validating markup page input on a client computer. A server computer with an application and a client computer with a browser communicate over a network, such as the Internet. The server computer sends a behavior rule file to the client computer. The server computer also sends a markup language page (such as an HTML page) to the client computer. The page has at least one input field code. The client computer identifies a rule in the rule file from attributes in the input field code, applies the rule to the input field, and provides a message to the user of the client computer depending on a result of the rule application.

### GENERAL

The above-mentioned problems are solved by the claimed subject-matter according to the independent claims. Specifically, an aspect of the specification may provide a system for network interaction between computing devices comprising a network and a first computing device configured to communicate over the network. The at least one additional computing device may also be configured to communicate over the network and to provide interactive content. The first computing device may be configured to access the interactive content. The interactive content may comprise at least one fields that can receive input from the first computing device

The at least one additional computing device can be further configured to provide a schema corresponding to the interactive content and to identify the input parameters.

There can be provided at least two interactive fields, and each of the fields can have different input parameters.

The first computing device can also be configured to access the schema and can be further configured to render the interactive content on the first computing device using the schema. The first computing device can be further configured to verify that input provided to each of the at least two fields conforms with the parameters.

The interactive content can be secure interactive content and the first computing device can be configured to access the secure interactive content via a secure connection. The secure connection can be carried by hypertext transfer protocol over secure socket layer.

The interactive content can be a web-page including interactive fields.

The fields can comprise information for completing a product order, including a name, an address, and an account number. The fields can further comprise a credit card type and the account number can be a credit card number. The parameter for the credit card type can comprise a selection of one of a plurality of known credit card types and the parameter for the account number can correspond to a known number format respective to the credit card type.

The at least one additional computing device can comprise a second computing device for hosting the content and a third computing device for hosting the schema. The first computing device can be configured with a network address for the third computing device. The third computing device can host a plurality of signatures schemas for different interactive contents.

The network can comprise the Internet.

The content that is in a web-page format can be configured for a full web-browser and the first computing device can comprise a mini-browser.

The first computing device can be a mobile electronic device with the combined functionality of a personal digital assistant, cell phone, email paging device, and a web-browser.

Another aspect of the present specification provides a first computing device in accordance with the first computing device according to any of the foregoing.

Another aspect of the present specification provides at least one additional computing device according to any of the foregoing.

Another aspect of the present specification may provide a first method for network interaction between computing devices comprising:
receiving interactive content at a first computing device from at least one additional computing device; the interactive content including at least one field that can receive input from the first computing device;
receiving a schema for the interactive content at the first computing device from the at least one additional computing device; the schema identifying the input parameters.

The interactive content can comprise at least two fields, and each of the fields can have different input parameters.

The method can further comprise rendering the interactive content on the first computing device using the schema.

The method can further comprise receiving input within the fields at the first computing device.

The method can further comprise verifying that input is provided to each of the at least two fields conforms with the parameters.

Another aspect of the specification may comprise a computer readable medium configured to maintain programming instructions in accordance with any of foregoing.

The present specification may provide, amongst other things, a method and system for network interaction between computing devices. In one embodiment a wireless client machine may be provided that includes a mini web-browser that is configured to access a secure web-page from a web-server. The secure web-page may comprise an interactive form. The wireless client machine may also be configured to access a schema that corresponds to the secure web-page. The wireless client machine may be configured to render the secure web-page using the contents of the schema.

### BRIEF DESCRIPTION OF THE DRAWINGS

Figure 1 is schematic representation of a system for network interaction between computing devices.
Figure 2 shows an exemplary secure web-page hosted by the web-server in Figure 1.
Figure 3 shows a flow-chart depicting a method of network interaction between computing devices that can be performed on the system of Figure 1.
Figure 4 shows the system of Figure 1 during exemplary performance of part of the method in Figure 3.
Figure 5 shows the system of Figure 1 during further exemplary performance of another part of the method in Figure 3.
Figure 6 shows the secure web-page of Figure 2 as rendered on the client machine of Figure 1 using the method of Figure 3.
Figure 7 shows another system for network interaction between computing devices.
Figure 8 shows the system of Figure 1 with an exemplary connection.
Figure 9 shows a flow-chart depicting a method of network interaction between computing devices that can be performed on the system of Figure 7.
Figure 10 shows the system of Figure 7 during exemplary performance of part of the method in Figure 9.
Figure 11 shows the system of Figure 7 during further exemplary performance of part of the method in Figure 9.
Figure 12 shows the system of Figure 7 during further exemplary performance of part of the method in Figure 9.
Figure 13 shows another system for network interaction between computing devices.

### DESCRIPTION OF PREFERRED EMBODIMENTS

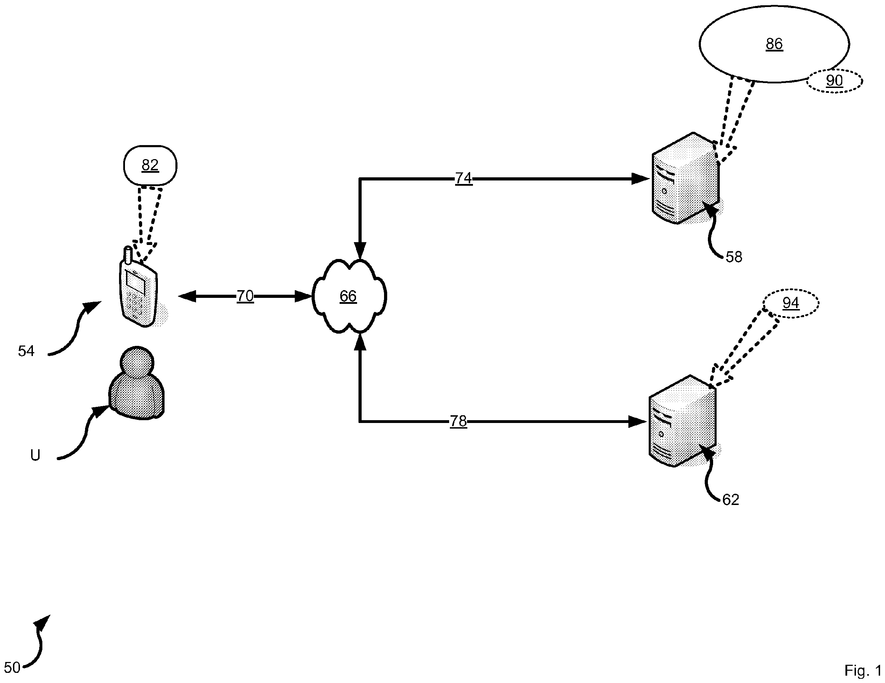

Referring now to Figure 1, a system for network interaction between computing devices is indicated generally at 50. In a present embodiment system 50 comprises a first computing device in the form of a client machine 54 and a second computing device in the form of a web server 58, and a third computing device in the form of a schema server 62. A network 66 interconnects each of the foregoing components.

Each client machine 54 is typically any type of computing or electronic device that can be used to interact with content available on network 66. Each client machine 54 is operated by a user U. Interaction includes displaying of information on client machine 54 as well as to receive input at client machine 54 that is in turn sent back over network 66. In a present embodiment, client machine 54 is a mobile electronic device with the combined functionality of a personal digital assistant, cell phone, email paging device, and a web-browser. Such a mobile electronic device thus includes a keyboard (or other input device(s)), a display, a speaker, (or other output device(s)) and a chassis within which the keyboard, display monitor, speaker are housed. The chassis also houses one or more central processing units, volatile memory (e.g. random access memory), persistent memory (e.g. Flash read only memory) and network interfaces to allow machine 54 to communicate over network 66.

Web server 58 and schema server 62 (which can, if desired, be implemented on a single server) can be based on any well-known server environment including a module that houses one or more central processing units, volatile memory (e.g. random access memory), persistent memory (e.g. hard disk devices) and network interfaces to allow servers 58 and 62 to communicate over network 66. For example, server 58 or server 62 or both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 58 and 62 are contemplated.

It should now be understood that the nature of network 66 and the links 70, 74 and 78 associated therewith is not particularly limited and are, in general, based on any combination of architectures that will support interactions between client machine 54 and servers 58 and 62. In a present embodiment network 66 itself includes the Internet as well as appropriate gateways and backhauls to links 70, 74 and 78. Accordingly, the links 70, 74 and 78 between network 66 and the interconnected components are complementary to functional requirements of those components.

More specifically, system 50 includes link 70 between client machine 54 and network 66, link 70 being based in a present embodiment on core mobile network infrastructure (e.g. Global System for Mobile communications ("GSM"); Code Division Multiple Access ("CDMA"); CDMA 2000; 3G) or on wireless local area network ("WLAN") infrastructures such as the Institute for Electrical and Electronic Engineers ("IEEE") 802.11 Standard (and its variants) or Bluetooth or the like or hybrids thereof. Note that in an exemplary variation of system 50 it is contemplated that client machine 54 could be other types of client machines whereby link 70 is a wired connection.

System 50 also includes link 74 which can be based on a T1, T3, 03 or any other suitable wired or wireless connection between server 58 and network 66. System 50 also includes link 78 which can be based on a T1, T3, 03 or any other suitable wired or wireless connection between server 62 and network 66.

As previously stated, client machine 54 is configured to interact with content available over network 66, including web content on web server 58. In a present embodiment, client machine 54 effects such interaction via a web-browser 82 that is configured to execute on client machine 54. As will be explained further below, web-browser 82 is a mini-browser in the sense that it is configured to re-render web-pages on the relatively small display of client machine 54, and during such re-rendering attempt to render those pages in a format that conveys information, as much as possible, substantially in the same manner as if those web-pages had been rendered on a full browser such as Internet Explorer or Firefox on a traditional desktop or laptop computer. Web server 58 is configured to host a web-site 86 that includes, in a present embodiment, a secure web-page 90. The non-secure portions of web-site 86 can be based on the Hypertext Transfer Protocol ("HTTP") while secure web-page 90 can be based on, for example, the HTTP over Secure Socket Layer ("SSL") ("HTTPS") protocol. By the same token web-browser 82 will be equipped to access and interact with both web-page 86 and secure web-page 90.

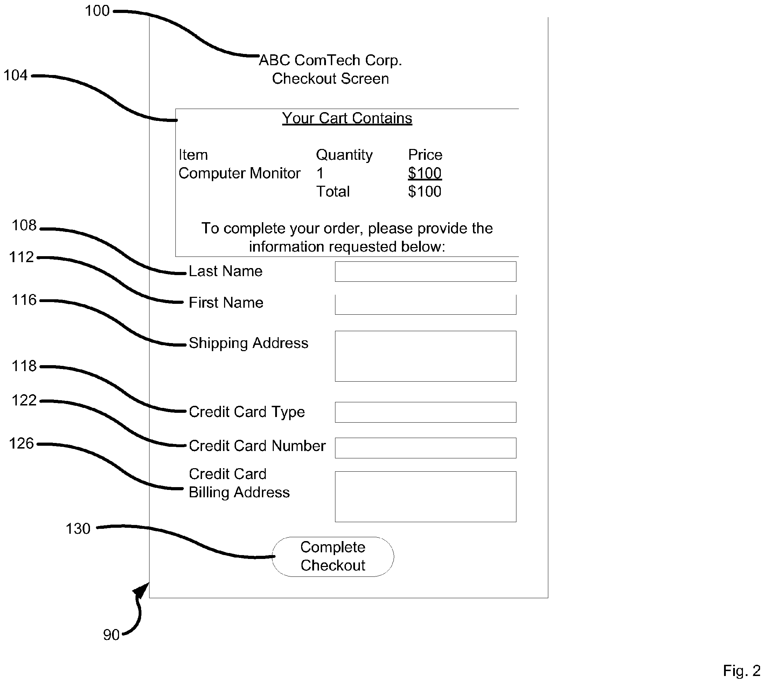

Figure 2 shows an exemplary representation of a secure web-page 90. The representation in Figure 2 shows how secure web-page 90 would be rendered on a traditional desk-top computer such as a Windows-based computer running the Internet Explorer or Firefox Web-browser as an HTTPS web-page. In the example, web-site 86 is an e-commerce web-site belonging to a fictional computer equipment retailer named ABC ComTech Corp. Web-site 86 can be browsed to select various computer equipment items for purchase, culminating in the selection of secure web-page 90 which is a checkout screen that can be used to complete the final order for the selected computer equipment and to provide payment and shipping information therefor. Due to security concerns, secure web-page 90 is therefore provided via the HTTPS protocol in order to protect the privacy of the purchaser and reduce the likelihood of identity theft. Thus, secure web-page 90 includes a plurality of fields including:
1) a title field 100 that identifies the equipment retailer and identifies web-page 90 as a checkout screen;
2) a shopping cart field 104 that identifies the equipment that has been selected for purchase and the total cost thereof;
3) a last name field 108 which is interactive can receive input that identifies the buyer
4) a first name field 112 which is interactive can receive input that identifies the buyer
5) a shipping address field 116 which is interactive can receive input that identifies the shipping address of the equipment identified in field 104.
6) a credit card type field 118 which is interactive and can receive input identifying the type of credit card (e.g. VISA^{™}, Mastercard^{™}) being used to purchase the equipment identified in field 104.
7) a credit card number field 122 which is interactive and can receive input identifying a credit card belonging to the entity identified in fields 108 and 112 and corresponds to the type identified in field 118.
8) a credit card billing address field 126 which is interactive and can receive input identifying the address to which bills for the credit card identified in credit card field 122 are sent.
9) a "complete checkout" button 130 which can be selected once fields 108-126 have been completed.

Note that it is common for interactive fields 108-126 to be constrained so that only certain types of input are permitted. For example, credit card number field 122 can be constrained to only permit digits, and can be further constrained to require a certain number of digits that correspond to an expected number of digits for a credit card corresponding to the credit card type identified in credit card type field 118. In addition, it is common in a traditional desktop browser scenario that the selection of button 130 the resulting page will be sent to server 86 and will lead to a verification process by server 86 that the data entered in fields 108-126 conforms with certain requirements - in the simplest example the verification process on server 86 will ensure that all fields 108-126 were actually completed, and a more complex verification process server 86 will ensure that fields were completed according to specific restrictions.

Those skilled in the art will now recognize that secure web-page 90 as shown in Figure 2 and fields 100-130 are purely exemplary and that secure web-page 90 need not be constrained to the structure or appearance in Figure 2.

Referring again to Figure 1, in a present embodiment, web-browser 82 is also configured to interact with schema server 62 in order to obtain a schema 94.

In general, a schema such as schema 94 comprises a file corresponding secure website content such as secure web-page 90. A schema can contain instructions to identify each page family on the website (login, signup, etc.), as well as instructions to extract desired objects and elements for each page family. A schema can additionally specify the relationship between the objects and attributes (user login field is a global username field, user password field is a global password field), and provide user U the capability of completing secure transactions. Note that not all transactions need to be implemented for a schema to be complete.

Schema 94, which can be maintained in the form of an extended Markup Language ("XML") file, or the like, contains data which assists web-browser 82 to render secure web-page 90 on client machine 54. Table I shows an exemplary representation of a schema 94 that corresponds to secure web-page 90.

**TABLE I**

| **Exemplary content of schema 94 corresponding to exemplary secure web-page 90** | | | |
|---|---|---|---|
| **Field Name** | **Field Reference** | **Field Type** | **Parameters** |
| Title Field | 100 | Non-interactive | Display contents only |
| Shopping Cart Field | 104 | Non-interactive | Display contents only |
| Last Name | 108 | Interactive | Name field; Text only |
| First Name | 112 | Interactive | Name field; Text only |
| Shipping Address | 116 | Interactive | Address Format; Mixed Numeric and Text; |
| | | | Requires: Street number; Street name; street type; city name; province or state; country; postal or zip code |
| Credit Card Type | 118 | Interactive | Menu List |
| Credit Card Number | 122 | Interactive | Credit Card Number; Numeric; Formation and Number of digits dependent on selection of Credit Card Type 118 |
| Credit Card Billing Address | 126 | Interactive | Address Format; Mixed Numeric and Text; |
| | | | Requires: Street number; Street name; street type; city name; province or state; country; postal or zip code |
| Checkout Complete | 130 | Interactive | Button indicating form is complete to submit form back to web server; If selected, ensure compliance with Parameters for Fields 108-126 prior to submitting form back to web server; if Parameters for Fields 108-126 are non-compliant then generate error message. |

Explaining Table I in greater detail, Field Name column corresponds to the field name in Figure 2; the Field Reference column corresponds to the reference character in Figure 2 and the respective field name. The Field Name and Field Reference are used by web-browser 82 to identify the various fields in secure-web-page 90. (It should be understood that the Field Name and Field Reference are actually encoded in secure web-page 90 and schema 94 in HTML format). The Field Type and Content Parameters columns of Table I are used by web-browser 82 to understand how the corresponding fields in Figure 2 are to be treated by web-browser 82 when web-browser 82 renders those fields. (It should be understood that the Field Type and Content Parameters are actually encoded in schema 94 in a format that is usable by web-browser 82 during rendering of web-page 90).

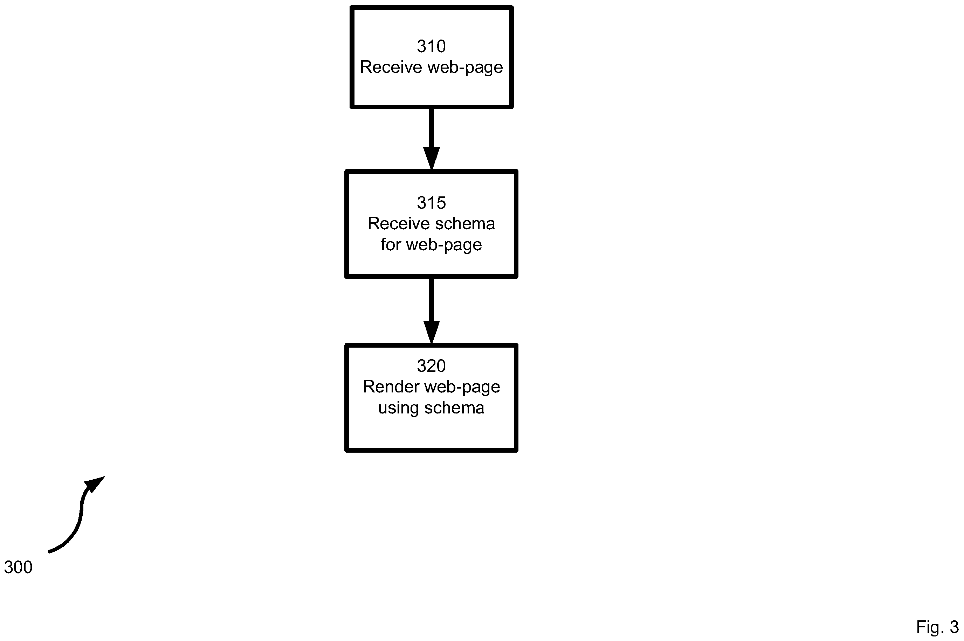

Referring now to Figure 3, a method for network interaction between two computers is represented in the form of a flow-chart as indicated generally at 300. Method 300 can be performed using system 50, though it is to be understood that method 300 can be performed on variations of system 50, and likewise it is to be understood that method 300 can be varied.

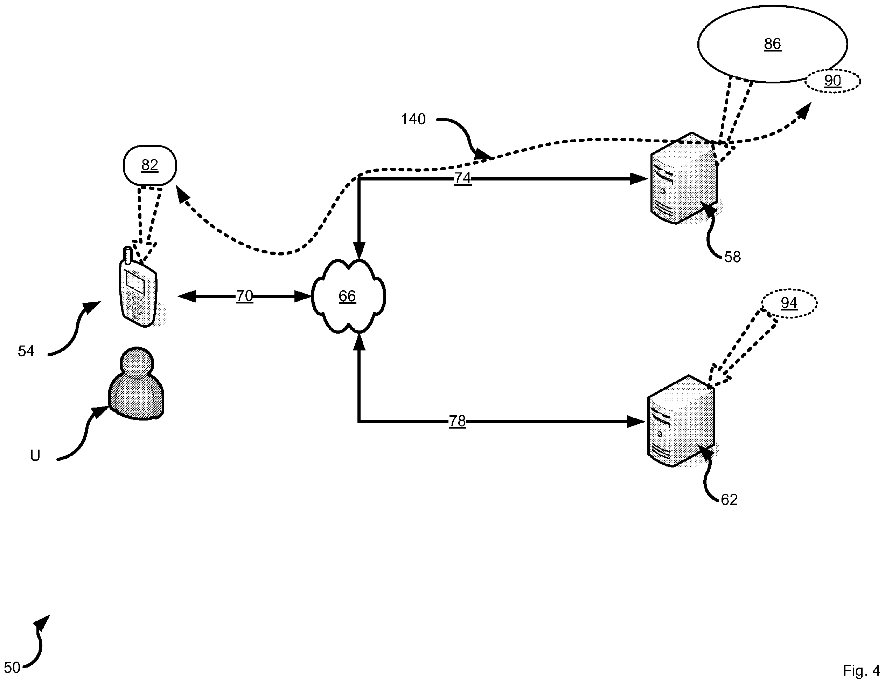

Beginning at block 310 a web-page is received. Performance of block 310 is represented in Figure 4, wherein secure web-page 90 is shown as being carried over an HTTPS connection 140 via link 74, network 66 and link 70 to web-browser 82. At this point it can be noted that the contents of secure web-page 90 are requested from web-server 58 and delivered to client machine 54 in substantially the same manner as would be occur if client machine 54 were rendered on a full browser such as Internet Explorer or Firefox on a traditional desktop or laptop computer with full capabilities. Thus, the programmer of web-page 90 (and for that matter, web-site 86) need not take any steps to optimize secure web-page 90 for the relatively limited display and processing capabilities of client machine 54.

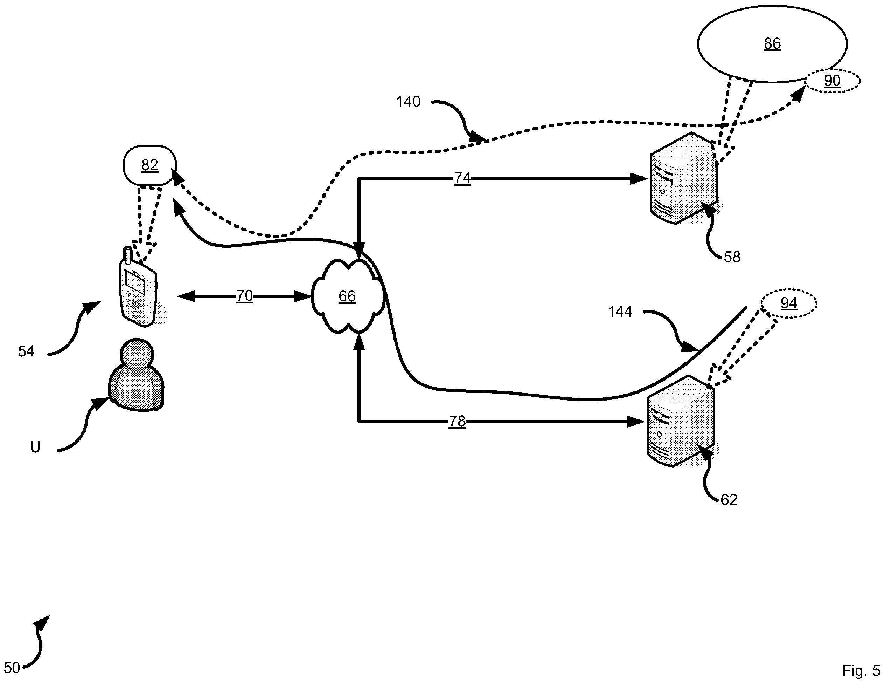

Referring again to Figure 2, at block 315 a schema web-page is received. Performance of block 315 is represented in Figure 5, wherein schema 94 is shown as being carried over a connection 144 via link 78, network 66 and link 70 to web-browser 82. Note that the nature of connection 144 is not particularly limited and can be based on any desired protocol.

Also note that the means by which web-browser 82 requests schema 94 is not particularly limited. In one particular embodiment, however, it is contemplated that web-browser 82 will be configured to automatically make network requests over network 66 to request a schema that corresponds to secure web-page 90. For example, schema server 62 can have a predefined network address on network 66 that is preprogrammed into client machine 54. The type of network address is not particularly limited, and can be, for example, any type of network identifier such as an Internet Protocol ("IP") address or a Uniform Resource Locator ("URL"). Any other suitable type of network address is contemplated. Client machine 54 can therefore be programmed to send a request to the address for schema server 62 and request that schema server 62 provide, if available, a schema (e.g. schema 94) that corresponds to secure web-page 90. The request provided by client machine 54 can be formed with any unique identifier for secure web-page 90, but in the context of the Internet the request would most typically be, or derived from, the URL associated with secure web-page 90. In turn, that unique identifier can be used to index schema 94 on schema server 62.

As well, authentication can be made through connection 144 to validate the origin of schema 94. For an example, private and public key based authentication can verify that schema 94 is originated from a trusted source.

Those skilled in the art will now recognize that system 50 can be implemented so that a plurality of secure web-pages (like secure web-page 90) are hosted over network 66 (either alone by server 58 or by a plurality of web servers like web server 58), and that a corresponding plurality of signatures for each of those secure web-pages can be maintained on schema server 62. Those skilled in the art will now recognize that there can in fact be a plurality of schema servers (like schema server 62) and that client machine 54 can be configured to search for corresponding schema files on one or more of those schema servers. Those skilled in the art will now further recognize that schema servers can be hosted by a variety of different parties, including, for example: a) a manufacturer client machine 54, b) a service provider that provides access to network 66 via link 70 on behalf of user U of client machine 54; or c) the entity that hosts web-site 86. In the latter example it can even be desired to simply host schema file 94 directly on web server 58 and thereby obviate the need for schema server 62.

Referring again to Figure 3, at block 320 the web-page is rendered using the schema. In other words the web-page received at block 310 is rendered using the schema received at block 315. Block 320 is in the present example performed by web-browser 82 which renders secure web-page 90 using schema 94. Of particular note is that web-browser can utilize the Field Type and Parameters data in Table I in order to render fields 108-126 in an interactive format on the display of client machine 54 and ensure compliance with the Parameters as those interactive fields are used to receive input from user U of client machine 54.

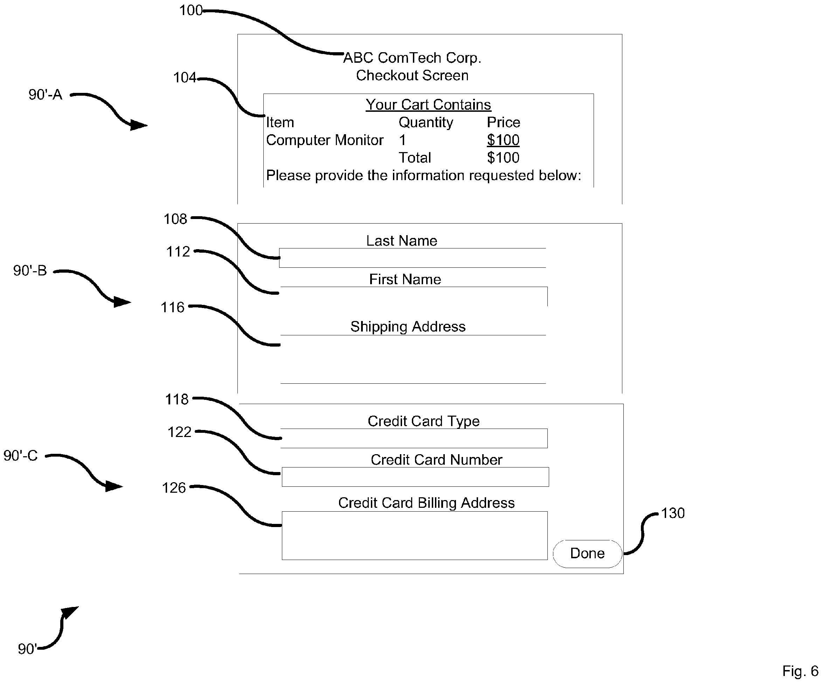

Figure 6 shows exemplary performance of block 320, as secure web-page 90 is now shown in Figure 6 as secure web-page 90' which consists of three separate screens 90'-A, 90'-B and 90'-C. As rendered on the display of client machine 54, user U input can be provided to scroll between each screen 90'-A, 90'-B and 90'-C. Likewise fields 108-126 can be completed on screens 90'-B and 90'-C and web-browser 82 will ensure compliance with the Parameters of Table I prior to accepting selection of the "Done" button 130 (equivalent to "Checkout complete" button 130). Also of note however, and not readily apparent from viewing Figure 6 is that client machine 54, through web-browser 82, is now configured to require input to fields 108-126 that comply with the Parameters in Table I. For example, web-browser 82 will require that the credit card number field 122 will contain a sequence of digits that corresponds to an expected sequence of digits from a credit card type from the credit card type field 118. Such verification can therefore occur prior to actually sending the completed form back to web-server 58.

Various advantages will now be apparent. One result of the foregoing is that a developer of secure web-page 90 need only prepare a secure web-page 90 for rendering on a full web-browser without considering the limitations of mini-browser 82 and yet secure web-page 90 can still be rendered and used on client 54. Another result is that schema 94 can be created by any party in order extend the availability of web-page 90 onto a plurality of client machines 54 and thereby increase traffic to web-site 86. Another result of the foregoing is that the security of connection 140 between server 58 and client machine 54 is preserved throughout the performance of method 300, and thereby affording privacy to user U of client 54. This can be particularly important if, as might occur in the prior art, user U were to inadvertently enter in a credit card number into, for example, last name field 108 which (for whatever reason) was not configured to be sent back to web server 58 via secure connection 140 but over an insecure connection (not shown); in this scenario, not only would the transaction fail leading frustration for user U, but also user U's credit card would be sent over an insecure connection thereby exposing the credit card number to theft.

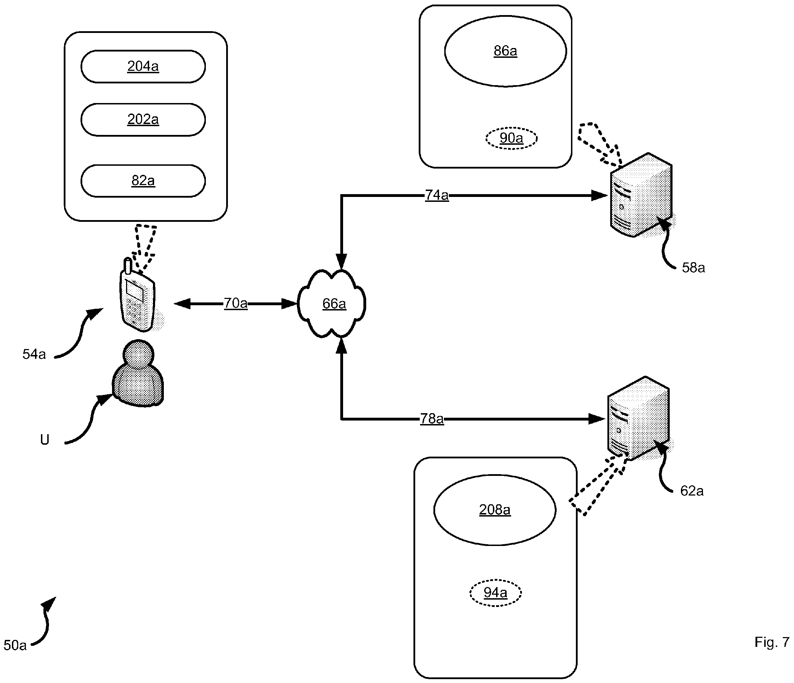

Referring now to Figure 7, a system for network interaction between computing devices in accordance with another embodiment is indicated generally at 50a. System 50a is a variant of system 50 and accordingly like elements in system 50a bear like reference characters to elements in system 50, except followed by the suffix "a". Of note however is that in system 50a client machine 54a includes, in addition to web-browser 82a, a transcoding engine 202a and a personal information database 204a. Transcoding engine 202a is configured to receive schema 94a and to use schema 94a in order to instruct web-browser 82a how to render web-page 90a on client machine 54a. Personal information database 204a includes personal information of user U, including, for example, at least one or more of login credentials, credit card information, gift card information. In general personal information database 204a includes information which should be kept secure during any interaction between client machine 54a and content available on network 66a. It should be understood that the term "personal information database" is used for convenience and that personal information database 204a is a data file that maintains those objects.

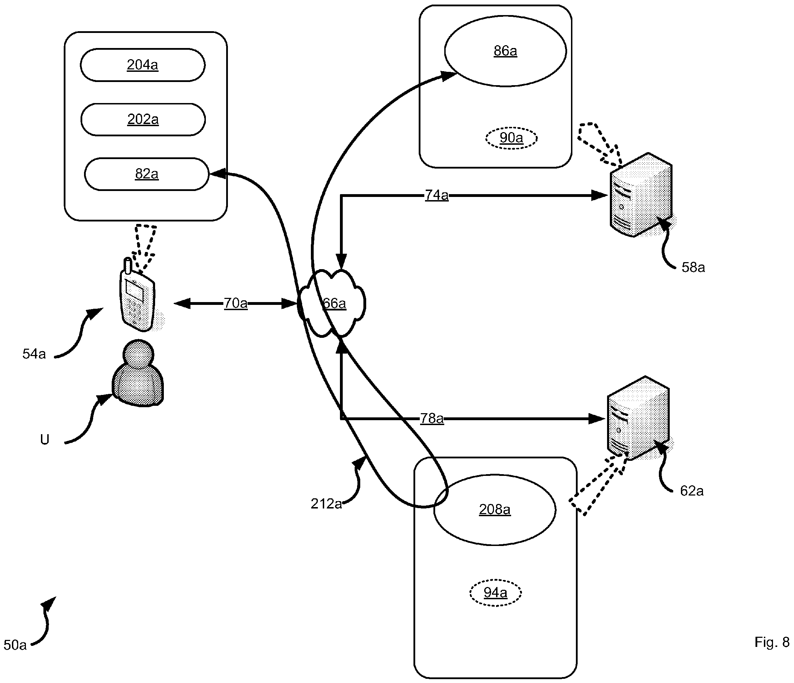

Also of note in system 50a is that schema server 62a also includes a transcoding engine 208a. As best shown in Figure 8, transcoding engine 208a is configured to intermediate traffic between web-browser 82a and non-secure portions of web-site 86a via connection 212a. Connection 212a itself can be a secure or non-secure connection, though typically would be non-secure in accordance with the non-secure portions of content on web-site 86a and thereby decrease overhead associated with connection 212a. Transcoding engine 208a is thus configured to, in substantially real-time, transcode non-secure portions of web-site 86a so that they are optimized on behalf of web-browser 82a for immediate display on client machine 54a. Thus, in this system 50a web-browser 82a is not configured to re-render the non-secure material on web-site 86a itself, but instead rely on transcoding engine 208a.

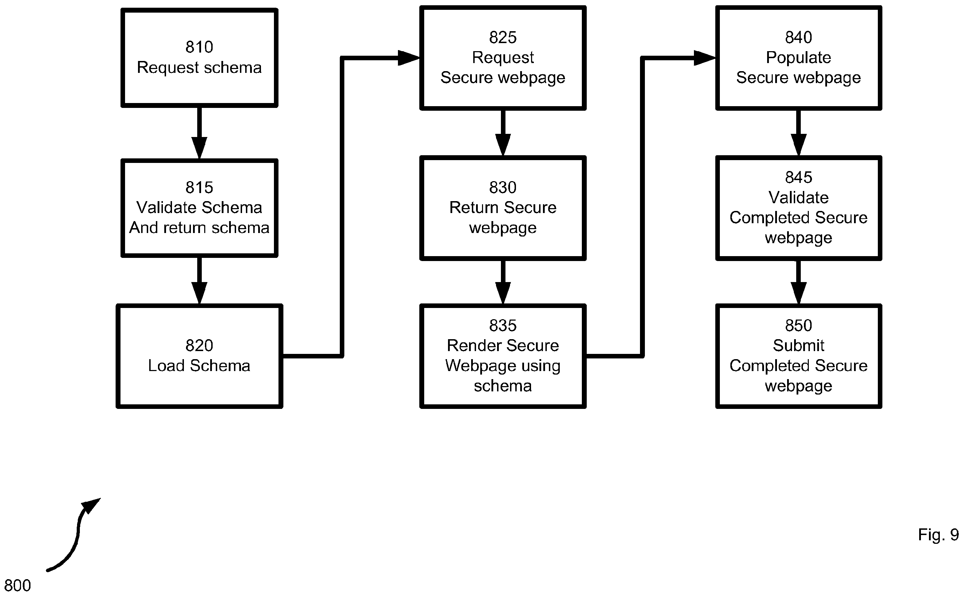

Assume, while referring to Figure 8, that such non-secure portions of web-site 86a reflect various computer equipment items for that can be browsed for purchase (consistent with the example relative to web-site 86 of system 50) via a secure checkout page associated with secure web-page 90a. System 50a can therefore also be used to effect a secure web-checkout using secure web-page 90a. Referring now to Figure 9, a method for network interaction is represented in the form of a flow-chart as indicated generally at 800. Method 800 can be performed using system 50a, though it is to be understood that method 800 can be performed on variations of system 50, and likewise it is to be understood that method 800 can be varied. Indeed, those skilled in the art will now recognize that method 800 is a variation of method 300.

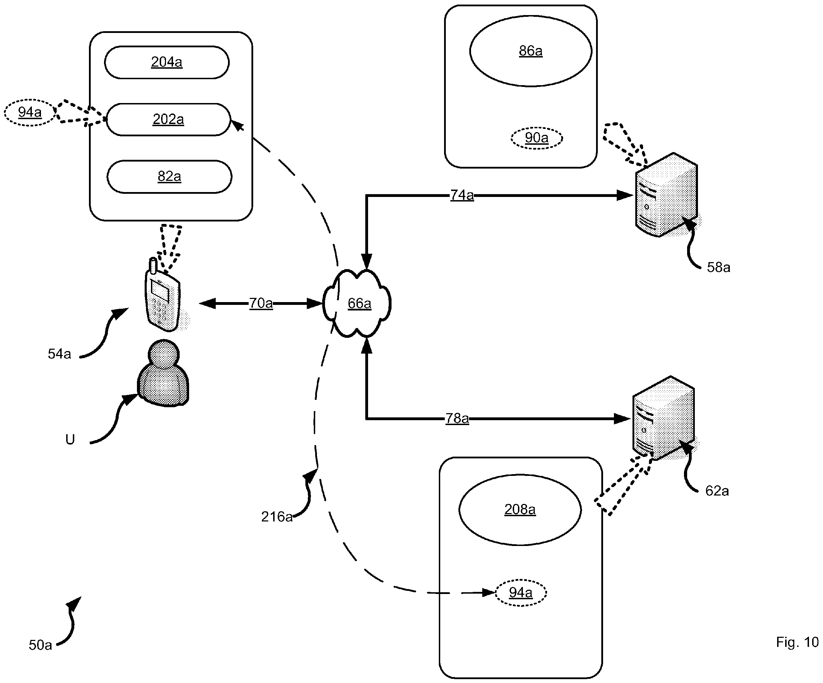

At block 810 a schema is requested. Block 810 is performed by transcoding engine 202a, which establishes a connection with schema server 62a in order to retrieve schema 94a. At block 815a the schema is validated and returned. The validation of block 815a (which, it will be appreciated, like certain other aspects of method 800, will be understood to be optional) can be effected by server 62a which can perform a validation operation to confirm that signature 94a matches secure web-site 90a and is otherwise up-to-date. If validation is not achieved then an exception (e.g. an error) can be generated. Assuming validation is achieved, then schema 94a is returned to transcoding engine 202a. At block 820, the schema is loaded. In the present example the schema is loaded into transcoding engine 202a. Blocks 810 through 820 are represented in Figure 10, as a secure connection between transcoding engine 202a of client machine 54a and schema 94a of server 82a is indicated at reference 216a such that schema 94a is now loaded onto client machine 54a and available to transcoding engine 202a.

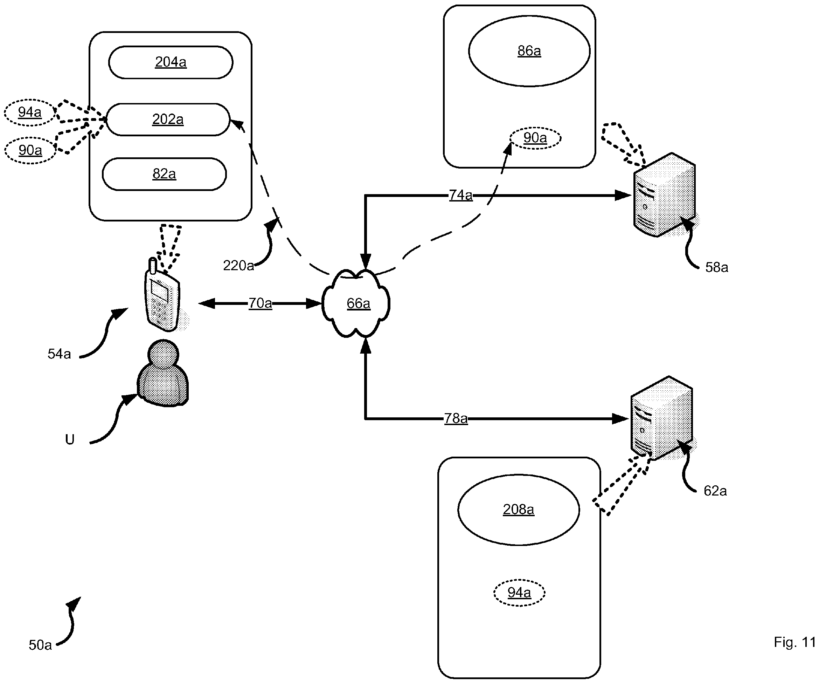

Referring again to Figure 9, at block 825 a secure web-page is requested. In this embodiment, transcoding engine 202a makes a direct request for secure web-page 90a, bypassing server 62a. At block 825, the secure web-page is returned. More particularly, web server 58a returns web-page 90a to transcoding engine 202a. Blocks 825 and 830 are represented in Figure 11 as a secure connection between transcoding engine 202a and secure web-page 90a is indicated at 220a such that secure web-page 90a is now loaded onto client machine 54a and available to transcoding engine 202a.

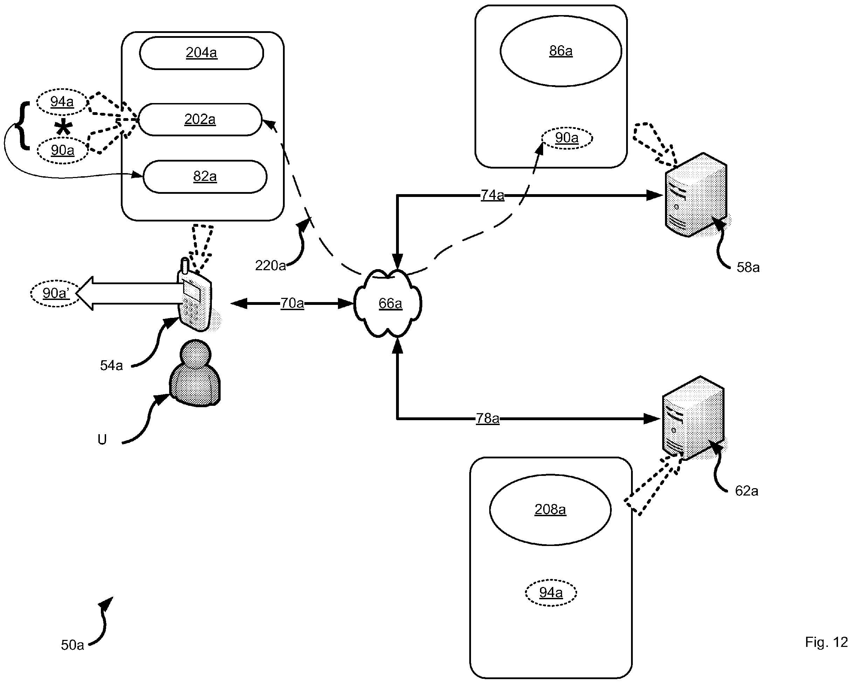

Referring again to Figure 9, at block 835 the secure web-page is rendered using the schema. In this embodiment, transcoding engine 202a makes use of the data contained in schema 94a in order to pass a transcoded version of secure web-page 90a so that secure web-page 90a can be rendered using web-browser 82a in accordance with the parameters prescribed by schema 94a. Block 835 is represented in Figure 12, as transcoded secure web-page 90a' is shown being rendered by web-browser 82a based on a transcoding operation performed by transcoding engine 202a utilizing schema 94a and secure web-page 90a.

Referring again to Figure 9, at block 840, the secure web-page is populated. In this embodiment, user U provides input to keyboard (or other input device), completing form-fields on transcoded secure web-page 90a' of client machine 54a in accordance with the interactive parameters that have been provided by schema 94a. Where those credentials are maintained within personal information database 204a, web-page 90a' can be automatically populated. then At block 845, the now-completed transcoded secure web-page 90a' is validated. Block 845 can be performed during completion of web-page 90a' or upon receiving input indicating that user U is done completing web-page 90a' or both.

At block 850, the completed secure web-page is submitted. In this embodiment, once validation has occurred, transcoding engine 202a will return the completed version of web-page 90a' to web-server 58 via secure connection 220a.

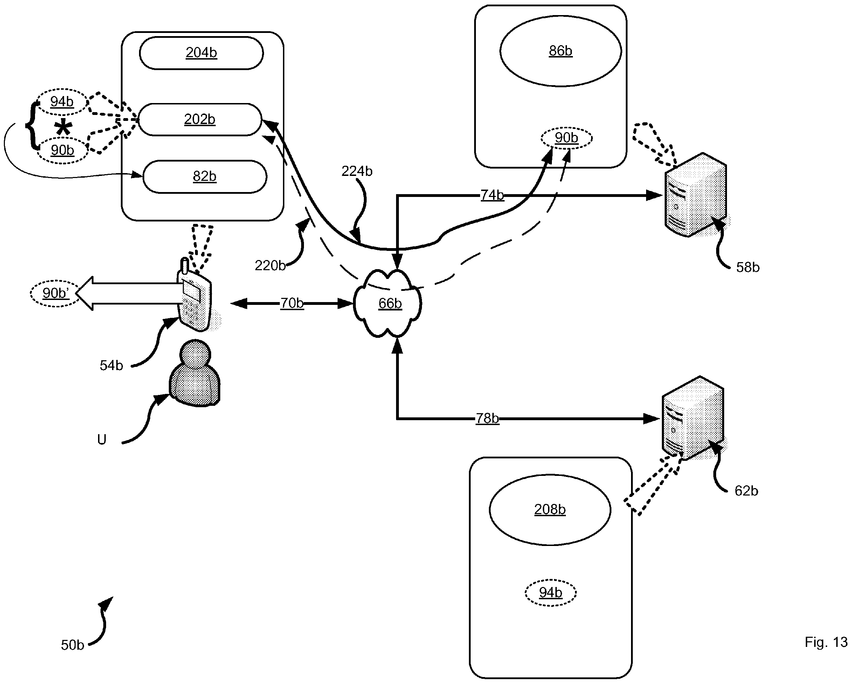

Referring now to Figure 13, a system for network interaction between computing devices in accordance with another embodiment is indicated generally at 50b. System 50b is a variant of system 50a and accordingly like elements in system 50b bear like reference characters to elements in system 50, except followed by the suffix "b". Of note however is that in system 50b there is not only a secure connection 220b corresponding to secure connection 220a, but there is also a non-secure connection 224b that is associated with web-page 90b (which may be implemented as a plurality of web-pages, or not, according to the technology employed). It is contemplated that certain fields where security is not considered important (e.g. shipping address field 116) may be carried over non-secure connection 224b, whereas fields where security is considered important (e.g. credit card number field 122) would be carried over secure connection 220b. Schema 94b therefore can ensure that, when transcoded web-page 90b' is rendered on the client machine 54b that user U does not inadvertently put user U's credit card number in shipping address field 116 and thereby risk exposing that credit card number to inception over non-secure connection 224. Alternatively, the non-secure fields can be carried in a connection similar to connection 212a.

Further enhancements and variations will now occur to those skilled in the art. For example, cookies can be employed between web-browser 82a and web server 58a to provide state to the stateless protocol HTTP. Furthermore, other HTTP headers may also provide instructions for the browser (character encoding, caching, etc...). Transcoding engine 202a need not alter the HTTP header in any fashion. Therefore processing of cookies and other HTTP headers can be provided by web-browser 82a, and not altered by server 62a.

The foregoing presents certain exemplary embodiments, but variations or combinations or subsets thereof are contemplated.

## Claims

1. A first computing device (54b) configured to:
communicate over a network (66b) with at least one additional computing device (58b, 62,b);
receive interactive content from the at least one additional computing device (58b), wherein said interactive content is a web-page (86b) having at least a first interactive field, said first interactive field having an input parameter;
receive a schema (94b) for said interactive content from said at least one additional computing device (58b, 62b), said schema identifying said input parameter;
render said interactive content using said schema (94b);
receive input within the first interactive field; and
verify that said input conforms with said input parameter based on said schema (94b);
**characterized in that**
the first computing device (54b) is configured to communicate said input within the first interactive field over the network via a secure connection (220b) or via a non-secure connection (224b) based upon whether said input conforms with the input parameter of the first interactive field.

2. The first computing device (54b) of claim 1 wherein said interactive content has at least one additional field having an additional input parameter different from said input parameter.

3. The first computing device (54b) of any one of claims 1 to 2 wherein said interactive content is secure interactive content and said first computing device (54b) is further configured to receive said secure interactive content via a secure connection (220b).

4. The first computing device (54b) of claim 3 wherein said secure connection (220b) is arranged to be carried by hypertext transfer protocol over secure socket layer.

5. The first computing device (54b) of any one of the preceding claims wherein said first interactive field comprises information for completing a product order; said first interactive field comprising a name, an address, and an account number.

6. The first computing device (54b) of claim 5 wherein said first interactive field further comprises a credit card type and said account number comprises a credit card number.

7. The first computing device (54b) of claim 6 wherein said input parameter for said credit card type comprise a selection of one of a plurality of known credit card types and said input parameter for said account number corresponds to a known number format respective to said credit card type.

8. The first computing device (54b) of any one of the preceding claims wherein said at least one additional computing device (58b, 62b) comprises a second computing device (58b) for hosting said content and a third computing device (62b) for hosting said schema (94b).

9. The first computing device (54b) of claim 8 wherein said first computing device (54b) is further configured with a network address for said third computing device (62b).

10. The first computing device (54b) of claim 8 or claim 9 wherein said third computing device (62b) hosts a plurality of schemas (94b) for different interactive contents.

11. The first computing device (54b) of any of the preceding claims wherein said network (66b) comprises an Internet.

12. The first computing device (54b) of any of the preceding claims wherein said interactive content comprises a web-page (86b) that is configured for a full web-browser and said first computing device (54b) comprises a mini-browser (82b).

13. The first computing device (54b) of any of the preceding claims wherein said first computing device comprises a mobile electronic device having the combined functionality of a personal digital assistant, cell phone, email paging device, and a web-browser.

14. A method for network interaction between computing devices (54b, 58b, 62b) comprising:
receiving interactive content at a first computing device (54b) from at least one additional computing device (58b, 62b);
said interactive content being a web-page (86b) having at least a first interactive field that can receive input from said first computing device (54b), said first interactive field having an input parameter;
receiving a schema (94b) for said interactive content at said first computing device (54b) from said at least one additional computing device (58b, 62b), said schema identifying said input parameter;
rendering said interactive content on said first computing device (54b) using said schema (94b);
receiving input within the first interactive field at said first computing device (54b); and
verifying by said first computing device (54b) that said input conforms with said input parameter based on said schema (94b);
**characterized in that**
the method comprises communicating the input within the first interactive field over the network via a secure connection (220b) or via a non-secure connection (224b) based upon whether said input conforms with the input parameter of the first interactive field.

15. The method of claim 14 wherein said interactive content comprises at least two fields and each of said fields has different input parameters.

16. The method of any one of claims 14 to 15 wherein said interactive content is secure interactive content and said first computing device (54b) receives said secure interactive content via a secure connection (220b).

17. The method of claim 16 wherein said secure connection (220b) is carried by hypertext transfer protocol over secure socket layer.

18. The method of any one of claims 14 to 17 wherein said interactive content comprises a plurality of interactive fields, said plurality of interactive fields comprising information for completing a product order, said plurality of interactive fields comprising a name, an address, and an account number, said plurality of interactive fields having a respective input parameter.

19. The method of claim 18 wherein said plurality of interactive fields further comprises a credit card type and said account number is a credit card number.

20. The method of claim 19 wherein said input parameter for said credit card type comprises a selection of one of a plurality of known credit card types and said input parameter for said account number corresponds to a known number format respective to said credit card type.

21. The method of any one of claims 14 to 20 wherein said at least one additional computing device (58b, 62b) comprises a second computing device (58b) for hosting said interactive content and a third computing device (62b) for hosting said schema (94b).

22. The method of claim 21 wherein said first computing device (54b) is configured with a network address for said third computing device (62b).

23. The method of claim 21 or claim 22 wherein said third computing device (62b) hosts a plurality of schemas (94b) for different interactive contents.

24. The method of any one of claims 14 to 23 wherein said network (66b) comprises an Internet.

25. The method of any one of claims 14 to 24 wherein said interactive content comprises a web-page (90b) that is configured for a full web-browser and said first computing device (54b) comprises a mini-browser (82b).

26. The method of any one of claims 14 to 25 wherein said first computing device (54b) is a mobile electronic device with the combined functionality of a personal digital assistant, cell phone, email paging device, and a web-browser.

27. A system (50b) for network interaction between computing devices (54b, 58b, 62b) comprising:
a network (66b);
a first computing device (54b) according to any of claims 1 to 13; and
at least one additional computing device (58b, 62b).

28. A computer readable medium storing computer readable instructions executable by a processor of a computing system (54b) to cause said system to implement the steps of the method of any one of claims 14 to 26.

## Patentansprüche

1. Eine erste Computervorrichtung (54b), die konfiguriert ist zum:
Kommunizieren über ein Netzwerk (66b) mit zumindest einer zusätzlichen Computervorrichtung (58b, 62b);
Empfangen von interaktivem Inhalt von der zumindest einen zusätzlichen Computervorrichtung (58b), wobei der interaktive Inhalt eine Webseite (86b) mit zumindest einem ersten interaktiven Feld ist, wobei das erste interaktive Feld einen Eingabeparameter hat;
Empfangen eines Schemas (94b) für den interaktiven Inhalt von der zumindest einen zusätzlichen Computervorrichtung (58b, 62b), wobei das Schema den Eingabeparameter identifiziert;
Darstellen des interaktiven Inhalts unter Verwendung des Schemas (94b);
Empfangen einer Eingabe in dem ersten interaktiven Feld; und
Verifizieren, dass die Eingabe mit dem Eingabeparameter übereinstimmt, basierend auf dem Schema (94b);
**dadurch gekennzeichnet, dass**
die erste Computervorrichtung (54b) konfiguriert ist zum Kommunizieren der Eingabe in dem ersten interaktiven Feld über das Netzwerk über eine sichere Verbindung (220b) oder über eine nicht-sichere Verbindung (224b) basierend darauf, ob die Eingabe mit dem Eingabeparameter des ersten interaktiven Felds übereinstimmt.

2. Die erste Computervorrichtung (54b) gemäß Anspruch 1, wobei der interaktive Inhalt zumindest ein zusätzliches Feld hat, das einen zusätzlichen Eingabeparameter hat, der sich von dem Eingabeparameter unterscheidet.

3. Die erste Computervorrichtung (54b) gemäß einem der Ansprüche 1 bis 2, wobei der interaktive Inhalt ein sicherer interaktiver Inhalt ist und die erste Computervorrichtung (54b) weiter konfiguriert ist zum Empfangen des sicheren interaktiven Inhalts über eine sichere Verbindung (220b).

4. Die erste Computervorrichtung (54b) gemäß Anspruch 3, wobei die sichere Verbindung (220b) ausgebildet ist, von HTTP(hypertext transfer protocol)-over-SSL (secure socket layer) getragen zu werden.

5. Die erste Computervorrichtung (54b) gemäß einem der vorhergehenden Ansprüche, wobei das erste interaktive Feld Information zum Vervollständigen einer Produktbestellung aufweist; wobei das erste interaktive Feld einen Namen, eine Adresse und eine Kontonummer aufweist.

6. Die erste Computervorrichtung (54b) gemäß Anspruch 5, wobei das erste interaktive Feld weiter einen Kreditkartentyp aufweist und die Kontonummer eine Kreditkartennummer aufweist.

7. Die erste Computervorrichtung (54b) gemäß Anspruch 6, wobei der Eingabeparameter für den Kreditkartentyp eine Auswahl von einem aus einer Vielzahl von bekannten Kreditkartentypen aufweist und der Eingabeparameter für die Kontonummer einem bekannten Zahlenformat in Bezug auf den Kreditkartentyp entspricht.

8. Die erste Computervorrichtung (54b) gemäß einem der vorhergehenden Ansprüche, wobei die zumindest eine zusätzliche Computervorrichtung (58b, 62b) eine zweite Computervorrichtung (58b) zum Hosten des Inhalts und eine dritte Computervorrichtung (62b) zum Hosten des Schemas (94b) aufweist.

9. Die erste Computervorrichtung (54b) gemäß Anspruch 8, wobei die erste Computervorrichtung (54b) weiter mit einer Netzwerkadresse für die dritte Computervorrichtung (62b) konfiguriert ist.

10. Die erste Computervorrichtung (54b) gemäß Anspruch 8 oder Anspruch 9, wobei die dritte Computervorrichtung (62b) eine Vielzahl von Schemen (94b) für unterschiedliche interaktive Inhalte hostet.

11. Die erste Computervorrichtung (54b) gemäß einem der vorhergehenden Ansprüche, wobei das Netzwerk (66b) ein Internet umfasst.

12. Die erste Computervorrichtung (54b) gemäß einem der vorhergehenden Ansprüche, wobei der interaktive Inhalt eine Webseite (86b) aufweist, die für einen vollständigen Webbrowser konfiguriert ist, und die erste Computervorrichtung (54b) einen Mini-Browser (82b) aufweist.

13. Die erste Computervorrichtung (54b) gemäß einem der vorhergehenden Ansprüche, wobei die erste Computervorrichtung eine mobile elektronische Vorrichtung aufweist, die die kombinierte Funktionalität eines persönlichen digitalen Assistenten, eines zellularen Telefons, einer Email-Paging-Vorrichtung und eines Web-Browsers aufweist.

14. Ein Verfahren für eine Netzwerkinteraktion zwischen Computervorrichtungen (54b, 58b, 62b), das aufweist:
Empfangen eines interaktiven Inhalts an einer ersten Computervorrichtung (54b) von zumindest einer zusätzlichen Computervorrichtung (58b, 62b);
wobei der interaktive Inhalt eine Webseite (86b) ist, die zumindest ein erstes interaktives Feld hat, das eine Eingabe von der ersten Computervorrichtung (54b) empfangen kann, wobei das erste interaktive Feld einen Eingabeparameter hat;
Empfangen eines Schemas (94b) für den interaktiven Inhalt an der ersten Computervorrichtung (54b) von der zumindest einen zusätzlichen Computervorrichtung (58b, 62b), wobei das Schema den Eingabeparameter identifiziert;
Darstellen des interaktiven Inhalts auf der ersten Computervorrichtung (54b) unter Verwendung des Schemas (94b);
Empfangen einer Eingabe in dem ersten interaktiven Feld an der ersten Computervorrichtung (54b); und
Verifizieren durch die erste Computervorrichtung (54b), dass die Eingabe mit dem Eingabeparameter übereinstimmt, basierend auf dem Schema (94b);
**dadurch gekennzeichnet, dass**
das Verfahren aufweist ein Kommunizieren der Eingabe in dem ersten interaktiven Feld über das Netzwerk über eine sichere Verbindung (220b) oder über eine nicht-sichere Verbindung (224b) basierend darauf, ob die Eingabe mit dem Eingabeparameter des ersten interaktiven Felds übereinstimmt.

15. Das Verfahren gemäß Anspruch 14, wobei der interaktive Inhalt zumindest zwei Felder aufweist und jedes der Felder verschiedene Eingabeparameter hat.

16. Das Verfahren gemäß einem der Ansprüche 14 bis 15, wobei der interaktive Inhalt ein sicherer interaktiver Inhalt ist und die erste Computervorrichtung (54b) den sicheren interaktiven Inhalt über eine sichere Verbindung (220b) empfängt.

17. Das Verfahren gemäß Anspruch 16, wobei die sichere Verbindung (220b) durch HTTP(hypertext transfer protocol)-over-SSL (secure socket layer) getragen wird.

18. Das Verfahren gemäß einem der Ansprüche 14 bis 17, wobei der interaktive Inhalt eine Vielzahl von interaktiven Feldern aufweist, wobei die Vielzahl von interaktiven Feldern Information zum Vervollständigen einer Produkt-bestellung aufweist, wobei die Vielzahl von interaktiven Feldern einen Namen, eine Adresse und eine Kontonummer aufweist, wobei die Vielzahl von interaktiven Feldern einen entsprechenden Eingabeparameter hat.

19. Das Verfahren gemäß Anspruch 18, wobei die Vielzahl von interaktiven Feldern weiter einen Kreditkartentyp aufweist und die Kontonummer eine Kreditkartennummer ist.

20. Das Verfahren gemäß Anspruch 19, wobei der Eingabeparameter für den Kreditkartentyp eine Auswahl von einem aus einer Vielzahl von bekannten Kreditkartentypen aufweist und der Eingabeparameter für die Kontonummer einem bekannten Zahlenformat in Bezug auf den Kreditkartentyp entspricht.

21. Das Verfahren gemäß einem der Ansprüche 14 bis 20, wobei die zumindest eine zusätzliche Computervorrichtung (58b, 62b) eine zweite Computervorrichtung (58b) zum Hosten des interaktiven Inhalts und eine dritte Computervorrichtung (62b) zum Hosten des Schemas (94b) aufweist.

22. Das Verfahren gemäß Anspruch 21, wobei die erste Computervorrichtung (54b) mit einer Netzwerkadresse für die dritte Computervorrichtung (62b) konfiguriert ist.

23. Das Verfahren gemäß Anspruch 21 oder Anspruch 22, wobei die dritte Computervorrichtung (62b) eine Vielzahl von Schemen (94b) für unterschiedliche interaktive Inhalte hostet.

24. Das Verfahren gemäß einem der Ansprüche 14 bis 23, wobei das Netzwerk (66b) ein Internet umfasst.

25. Das Verfahren gemäß einem der Ansprüche 14 bis 24, wobei der interaktive Inhalt eine Webseite (90b) aufweist, die für einen vollständigen Webbrowser konfiguriert ist, und die erste Computervorrichtung (54b) einen Mini-Browser (82b) aufweist.

26. Das Verfahren gemäß einem der Ansprüche 14 bis 25, wobei die erste Computervorrichtung (54b) eine mobile elektronische Vorrichtung ist mit der kombinierten Funktionalität eines persönlichen digitalen Assistenten, eines zellularen Telefons, einer Email-Paging-Vorrichtung und eines Web-Browsers.

27. Ein System (50b) für eine Netzwerkinteraktion zwischen Computervorrichtungen (54b, 58b, 62b), das aufweist:
ein Netzwerk (66b);
eine erste Computervorrichtung (54b) gemäß einem der Ansprüche 1 bis 13; und
zumindest eine zusätzliche Computervorrichtung (58b, 62b).

28. Computerlesbares Medium, das computerlesbare Anweisungen speichert, die durch einen Prozessor eines Computersystems (54b) ausführbar sind, um das System zu veranlassen, die Schritte des Verfahrens gemäß einem der Ansprüche 14 bis 26 zu implementieren.

## Revendications

1. Premier dispositif informatique (54b) configuré pour :
communiquer sur un réseau (66b) avec au moins un autre dispositif informatique (58b, 62b) ;
recevoir du contenu interactif en provenance dudit au moins un autre dispositif informatique (58b), ledit contenu interactif étant une page web (86b) comprenant au moins un premier champ interactif, ledit premier champ interactif ayant un paramètre d'entrée ;
recevoir, en provenance dudit au moins un autre dispositif informatique (58b, 62b), un schéma (94b) pour ledit contenu interactif, ledit schéma identifiant ledit paramètre d'entrée ;
effectuer le rendu dudit contenu interactif à l'aide dudit schéma (94b) ;
recevoir une saisie dans le premier champ interactif ; et
vérifier que ladite saisie est conforme audit paramètre d'entrée en fonction dudit schéma (94b) ;
le premier dispositif informatique (54b) étant **caractérisé en ce qu'**il est configuré pour communiquer ladite saisie au sein du premier champ interactif sur le réseau, via une connexion sécurisée (220b) ou via une connexion non sécurisée (224b), suivant que ladite saisie est ou non conforme au paramètre d'entrée du premier champ interactif.

2. Premier dispositif informatique (54b) selon la revendication 1, dans lequel ledit contenu interactif comprend au moins un autre champ qui a un autre paramètre d'entrée, différent dudit paramètre d'entrée.

3. Premier dispositif informatique (54b) selon l'une quelconque des revendications 1 et 2, dans lequel ledit contenu interactif est un contenu interactif sécurisé, et ledit premier dispositif informatique (54b) étant en outre configuré pour recevoir ledit contenu interactif sécurisé via une connexion sécurisée (220b).

4. Premier dispositif informatique (54b) selon la revendication 3, dans lequel ladite connexion sécurisée (220b) est conçue pour être transportée par le protocole de transfert d'hypertexte sur la couche de liaison sécurisée.

5. Premier dispositif informatique (54b) selon l'une quelconque des revendications précédentes, dans lequel ledit premier champ interactif comprend des informations en vue de parachever une commande de produit ; ledit premier champ interactif comprenant un nom, une adresse et un numéro de compte.

6. Premier dispositif informatique (54b) selon la revendication 5, dans lequel ledit premier champ interactif comprend en outre un type de carte de crédit et ledit numéro de compte comprend un numéro de carte de crédit.

7. Premier dispositif informatique (54b) selon la revendication 6, dans lequel ledit paramètre d'entrée pour ledit type de carte de crédit comprend une sélection d'un type sur une pluralité de types de cartes de crédit connus et ledit paramètre d'entrée pour ledit numéro de compte correspond à un format de numéro connu en fonction dudit type de carte de crédit.

8. Premier dispositif informatique (54b) selon l'une quelconque des revendications précédentes, dans lequel ledit au moins un autre dispositif informatique (58b, 62b) comprend un deuxième dispositif informatique (58b) destiné à héberger ledit contenu et un troisième dispositif informatique (62b) destiné à héberger ledit schéma (94b).

9. Premier dispositif informatique (54b) selon la revendication 8, dans lequel ledit premier dispositif informatique (54b) est en outre configuré avec une adresse de réseau pour ledit troisième dispositif informatique (62b).

10. Premier dispositif informatique (54b) selon la revendication 8 ou la revendication 9, dans lequel ledit troisième dispositif informatique (62b) héberge une pluralité de schémas (94b) pour différents contenus interactifs.

11. Premier dispositif informatique (54b) selon l'une quelconque des revendications précédentes, dans lequel ledit réseau (66b) consiste en un internet.

12. Premier dispositif informatique (54b) selon l'une quelconque des revendications précédentes, dans lequel ledit contenu interactif consiste en une page web (86b) qui est configurée pour un navigateur web complet et ledit premier dispositif informatique (54b) comprend un mini-navigateur (82b).

13. Premier dispositif informatique (54b) selon l'une quelconque des revendications précédentes, ledit premier dispositif informatique consistant en un dispositif électronique mobile offrant les fonctionnalités combinées d'un assistant numérique personnel, d'un téléphone cellulaire, d'un dispositif de radiomessagerie et de courriel et d'un navigateur web.

14. Procédé d'interaction sur réseau entre dispositifs informatiques (54b, 58b, 62b), comprenant les étapes consistant à :
recevoir du contenu interactif sur un premier dispositif informatique (54b) en provenance d'au moins un autre dispositif informatique (58b, 62b) ;
ledit contenu interactif étant une page web (86b) comprenant au moins un premier champ interactif qui peut recevoir une saisie provenant dudit premier dispositif informatique (54b), ledit premier champ interactif ayant un paramètre d'entrée ;
recevoir sur ledit premier dispositif informatique (54b), en provenance dudit au moins un autre dispositif informatique (58b, 62b), un schéma (94b) pour ledit contenu interactif, ledit schéma identifiant ledit paramètre d'entrée ;
effectuer le rendu dudit contenu interactif sur ledit premier dispositif informatique (54b) à l'aide dudit schéma (94b) ;
recevoir une saisie dans le premier champ interactif sur ledit premier dispositif informatique (54b) ; et
vérifier par ledit premier dispositif informatique (54b) que ladite saisie est conforme audit paramètre d'entrée en fonction dudit schéma (94b) ;
le procédé étant **caractérisé en ce qu'**il comprend l'étape consistant à communiquer la saisie au sein du premier champ interactif sur le réseau, via une connexion sécurisée (220b) ou via une connexion non sécurisée (224b), suivant que ladite saisie est ou non conforme au paramètre d'entrée du premier champ interactif.

15. Procédé selon la revendication 14, dans lequel ledit contenu interactif comprend au moins deux champs et chacun de ces champs possède des paramètres d'entrée différents.

16. Procédé selon l'une quelconque des revendications 14 et 15, dans lequel ledit contenu interactif est un contenu interactif sécurisé et ledit premier dispositif informatique (54b) reçoit ledit contenu interactif sécurisé via une connexion sécurisée (220b).

17. Procédé selon la revendication 16, dans lequel ladite connexion sécurisée (220b) est transportée par le protocole de transfert d'hypertexte sur la couche de liaison sécurisée.

18. Procédé selon l'une quelconque des revendications 14 à 17, dans lequel ledit contenu interactif comprend une pluralité de champs interactifs, ladite pluralité de champs interactifs comprenant des informations en vue de parachever une commande de produit, ladite pluralité de champs interactifs comprenant un nom, une adresse et un numéro de compte, ladite pluralité de champs interactifs possédant des paramètres d'entrée respectifs.

19. Procédé selon la revendication 18, dans lequel ladite pluralité de champs interactifs comprend en outre un type de carte de crédit et ledit numéro de compte est un numéro de carte de crédit.

20. Procédé selon la revendication 19, dans lequel ledit paramètre d'entrée pour ledit type de carte de crédit comprend une sélection d'un type sur une pluralité de types de cartes de crédit connus et ledit paramètre d'entrée pour ledit numéro de compte correspond à un format de numéro connu en fonction dudit type de carte de crédit.

21. Procédé selon l'une quelconque des revendications 14 à 20, dans lequel ledit au moins un autre dispositif informatique (58b, 62b) consiste en un deuxième dispositif informatique (58b) destiné à héberger ledit contenu interactif et un troisième dispositif informatique (62b) destiné à héberger ledit schéma (94b).

22. Procédé selon la revendication 21, dans lequel ledit premier dispositif informatique (54b) est configuré avec une adresse de réseau pour ledit troisième dispositif informatique (62b).

23. Procédé selon la revendication 21 ou la revendication 22, dans lequel ledit troisième dispositif informatique (62b) héberge une pluralité de schémas (94b) pour différents contenus interactifs.

24. Procédé selon l'une quelconque des revendications 14 à 23, dans lequel ledit réseau (66b) consiste en un internet.

25. Procédé selon l'une quelconque des revendications 14 à 24, dans lequel ledit contenu interactif consiste en une page web (90b) qui est configurée pour un navigateur web complet et ledit premier dispositif informatique (54b) comprend un mini-navigateur (82b).

26. Procédé selon l'une quelconque des revendications 14 à 25, dans lequel ledit premier dispositif informatique (54b) consiste en. un dispositif électronique mobile offrant les fonctionnalités combinées d'un assistant numérique personnel, d'un téléphone cellulaire, d'un dispositif de radiomessagerie et de courriel et d'un navigateur web.

27. Système (50b) pour l'interaction sur réseau entre des dispositifs informatiques (54b, 58b, 62b), comprenant :
un réseau (66b) ;
un premier dispositif informatique (54b) selon l'une quelconque des revendications 1 à 13 ; et
au moins un autre dispositif informatique (58b, 62b).

28. Support lisible par ordinateur portant des instructions lisibles par ordinateur qui peuvent être exécutées par un processeur d'un système informatique (54b) afin d'amener ledit système à mettre en oeuvre les étapes du procédé selon l'une quelconque des revendications 14 à 26.
